# EUROPEAN PATENT APPLICATION

(11) **EP 4 844 862 A1**
(43) Date of publication of application: **25.11.2026**
(21) Application number: 25882831.8
(22) Date of filing: 11.09.2025
(51) Int. Cl.: H01M 10/0562, H01M 10/052, H01M 10/0585, C01B 25/14

(54) **SULFIDE-BASED SOLID ELECTROLYTE COMPOUND**

(30) Priority: 25.10.2024 KR 20240147648
(71) Applicant: EcoPro BM Co., Ltd, Cheongju-si, Chungcheongbuk-do 28116 (KR)
(72) Inventor: JUNG, Se Hun, Cheongju-si, Chungcheongbuk-do 28116 (KR); YANG, A Reum, Cheongju-si, Chungcheongbuk-do 28116 (KR); KIM, Mi Jin, Cheongju-si, Chungcheongbuk-do 28116 (KR); JUNG, Ha Young, Cheongju-si, Chungcheongbuk-do 28116 (KR)
(74) Representative: Prüfer & Partner mbB Patentanwälte · Rechtsanwälte
(86) International application number: PCT/KR2025/014149
(87) International publication number: WO 2026/089289

(57) **Abstract**

The present disclosure relates to a sulfide-based solid electrolyte compound and a lithium secondary battery comprising the same, and more specifically, the present disclosure relates to a method of improving the atmospheric stability and electrochemical performance of a sulfide-based solid electrolyte having an argyrodite-type crystal structure.

## Description

### BACKGROUND

### 1. Field of the Invention

The present disclosure relates to a sulfide-based solid electrolyte compound and a lithium secondary battery comprising the same, and more specifically, the present disclosure relates to a method of improving the atmospheric stability and electrochemical performance of a sulfide-based solid electrolyte having an argyrodite-type crystal structure.

### 2. Discussion of Related Art

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

However, such an organic electrolyte solution or polymer electrolyte typically uses a flammable organic solvent. Therefore, when an abnormally high temperature occurs due to internal or external factors of the lithium secondary battery, a fire or explosion may occur due to the electrolyte solution.

Owing to such safety problems, solid batteries to which a solid electrolyte is applied as a substitute for liquid-type batteries are drawing attention. Solid batteries have high stability, and their practical application as next-generation batteries having a high energy density is expected. In addition, when a solid electrolyte is introduced in the form of a kind of membrane-type structure, it can replace the separator that is essential for liquid-type batteries.

As a solid electrolyte used in lithium secondary batteries, a sulfide-based solid electrolyte is known. Various crystal structures of sulfide-based solid electrolytes are known, and one of them is an argyrodite-type crystal structure.

However, a solid electrolyte has a lower ionic conductivity than a liquid electrolyte, and there is a problem in that it can be easily deteriorated by a decomposition reaction inside the battery. In addition, a sulfide-based solid electrolyte has a problem in that it may react with moisture and/or oxygen in the air to generate hydrogen sulfide.

Therefore, there is a need to develop a novel compound that has a high ionic conductivity while improving the atmospheric stability and electrochemical performance of a sulfide-based solid electrolyte compound.

### SUMMARY OF THE INVENTION

According to the present disclosure, one object is to provide a sulfide-based solid electrolyte compound that is simultaneously excellent in atmospheric stability and electrochemical performance, by doping oxygen into a sulfide-based solid electrolyte compound having an argyrodite-type crystal structure to suppress the reaction between the solid electrolyte and moisture and/or oxygen and, at the same time, to improve the ionic conductivity.

In addition, one object of the present disclosure is to provide a solid electrolyte membrane and a lithium secondary battery using the sulfide-based solid electrolyte compound defined herein.

The objects of the present disclosure are not limited to the above-described objects, and other objects and advantages of the present disclosure that are not described can be understood by the following description and will be more clearly understood by the embodiments of the present disclosure. In addition, it is apparent that the objects and advantages of the present disclosure can be realized by the means and combinations thereof indicated in the claims.

According to one aspect of the present disclosure, there is provided a sulfide-based solid electrolyte compound, comprising a crystal phase of an argyrodite-type crystal structure, wherein an ionic conductivity retention rate at 25°C before and after exposure to the atmosphere exceeds 28%:

### [Ionic conductivity retention rate]

Here, the ionic conductivity retention rate is obtained by dividing the ionic conductivity after exposure for 24 hours to air controlled so that the dew point becomes -40°C ± 0.5°C at 25°C by the ionic conductivity before the exposure, and multiplying the value by 100.

Meanwhile, the sulfide-based solid electrolyte compound may comprise a lithium (Li) element, a phosphorus (P) element, a sulfur (S) element, a halogen (X) element, and an oxygen (O) element.

In this case, in the crystal phase of the argyrodite-type crystal structure, the molar ratio O/P of the oxygen (O) element to the phosphorus (P) element may be 0.5 or less.

In an embodiment, the crystal phase of the argyrodite-type crystal structure may be represented by the following Chemical Formula 1:

[Chemical Formula 1] Li₇₋ₓPS_{6-(x+y)}XₓO_{y}

In Chemical Formula 1, 1≤x≤2 and 0<y≤0.5.

In another embodiment, the crystal phase of the argyrodite-type crystal structure may be represented by the following Chemical Formula 1':

[Chemical Formula 1'] Li₇₋ₓPS₆₋ₓXₓO_{y}

In Chemical Formula 1', 1≤x≤2 and 0<y≤0.5.

Meanwhile, the sulfide-based solid electrolyte compound may have a critical current density of 0.86 mA/cm² or more:

### [Critical current density]

Here, the critical current density is the current value at which a cell short occurs when charging and discharging are performed while increasing the current value per unit area at 25°C, using a symmetric cell in which Li metal is positioned at both ends of a solid electrolyte layer prepared by pressing 200 mg of the sulfide-based solid electrolyte compound at 4 ton for 2 minutes.

Meanwhile, the sulfide-based solid electrolyte compound may be a compound derived from at least one selected from the group consisting of P₂O₅, Li₂SO₄, and Li₃PO₄.

In an example, the sulfide-based solid electrolyte compound may be obtained by mixing lithium sulfide (Li₂S) powder, phosphorus pentasulfide (P₂S₅) powder, lithium halide (LiX) powder, and an oxygen source powder, and sintering the mixture at 350 to 600°C under an inert atmosphere.

In this case, the oxygen source powder may be at least one selected from the group consisting of P₂O₅, Li₂SO₄, and Li₃PO₄.

According to another aspect, there is provided a solid electrolyte membrane comprising the above-described sulfide-based solid electrolyte compound.

According to still another aspect, there is provided a lithium secondary battery having the above-described solid electrolyte membrane.

### DETAILED DESCRIPTION OF EXEMPLARY EMBODIMENTS

For a better understanding of the present disclosure, certain terms are defined herein for convenience. Unless otherwise defined herein, scientific and technical terms used in the present disclosure will have meanings commonly understood by those skilled in the art. In addition, unless otherwise specified in the context, the singular should be understood to include the plural, and the plural should be understood to include the singular. Amounts or ratios indicated herein are molar amounts or molar ratios, unless otherwise specified in the context.

### Sulfide-based solid electrolyte compound

The sulfide-based solid electrolyte compound according to one aspect of the present disclosure comprises a crystal phase of an argyrodite-type crystal structure, wherein an ionic conductivity retention rate at 25°C before and after exposure to the atmosphere exceeds 28%, for example, may be 28.1%, 28.5%, 29%, 29.5%, 30%, 30.5%, 31%, 31.5%, 32%, 32.5%, 33%, 33.5%, 34%, 34.5%, 35%, 35.5%, 36%, 36.5%, 37%, 37.5%, 38%, 38.5%, 39%, 39.5%, 40%, 40.5%, 41%, 41.5%, 42%, 42.5%, 43%, 43.5%, 44%, 44.5%, 45%, 45.5%, 46%, 46.5%, 47%, 47.5%, 48%, 48.5%, 49%, 49.5%, 50%, or a range between two of these values:

### [Ionic conductivity retention rate]

Here, the ionic conductivity retention rate is obtained by dividing the ionic conductivity after exposure for 24 hours to air controlled so that the dew point becomes -40°C ± 0.5°C at 25°C by the ionic conductivity before the exposure, and multiplying the value by 100.

The sulfide-based solid electrolyte compound has lithium ion conductivity and may have a crystal phase of an argyrodite-type crystal structure.

The argyrodite-type crystal structure refers to the same structure as argyrodite (Ag₈GeS₆), a silver-germanium-sulfur mineral. The argyrodite-type crystal structure may have an orthorhombic (Pna2₁) phase and a cubic (F-43m) phase, among which the cubic crystal structure may have high lithium ion conductivity. Typically, the argyrodite-type crystal structure exhibits a cubic phase having excellent lithium ion conductivity at a high temperature, and exhibits an orthorhombic phase at a low temperature.

For example, Li₇PS₆, Li₆PS₅X (X is at least one of Cl, Br, and I), and the like are known as lithium-ion-conductive solid electrolyte compounds having an argyrodite-type crystal structure.

However, the argyrodite-type crystal structure has a problem in that it is sensitive to air, humidity, and the like, so that its performance is easily degraded.

Typically, a sulfide-based solid electrolyte compound having a general argyrodite-type crystal structure has an ionic conductivity retention rate before and after the above-described atmospheric stability evaluation test of only about 25%.

On the other hand, the sulfide-based solid electrolyte compound has strong resistance to such deterioration and can thus have a high ionic conductivity retention rate.

In an example, the sulfide-based solid electrolyte compound comprises oxygen atoms, and can thereby suppress the decomposition reaction of the compound. Therefore, a secondary battery using the sulfide-based solid electrolyte compound can exhibit stable cycle behavior.

That is, the sulfide-based solid electrolyte compound may comprise a lithium (Li) element, a phosphorus (P) element, a sulfur (S) element, a halogen (X) element, and an oxygen (O) element.

Here, in the crystal phase of the argyrodite-type crystal structure, the molar ratio Li/P of the lithium (Li) element to the phosphorus (P) element may be more than 5 and less than 7, for example, 5.01, 5.05, 5.1, 5.15, 5.2, 5.25, 5.3, 5.35, 5.4, 5.45, 5.5, 5.55, 5.6, 5.65, 5.7, 5.75, 5.8, 5.85, 5.9, 5.95, 6, 6.05, 6.1, 6.15, 6.2, 6.25, 6.3, 6.35, 6.4, 6.45, 6.5, 6.55, 6.6, 6.65, 6.7, 6.75, 6.8, 6.85, 6.9, 6.95, 6.99, or a range between two of these values, but is not limited thereto.

If the value of Li/P is outside the above range, the arrangement and distribution ratio of lithium ions inside the compound change, so that the ionic conductivity may be lowered.

In addition, in the crystal phase of the argyrodite-type crystal structure, the molar ratio S/P of the sulfur (S) element to the phosphorus (P) element may be 3.5 to 6, for example, 3.5, 3.55, 3.6, 3.65, 3.7, 3.75, 3.8, 3.85, 3.9, 3.95, 4, 4.05, 4.1, 4.15, 4.2, 4.25, 4.3, 4.35, 4.4, 4.45, 4.5, 4.55, 4.6, 4.65, 4.7, 4.75, 4.8, 4.85, 4.9, 4.95, 5, 5.05, 5.1, 5.15, 5.2, 5.25, 5.3, 5.35, 5.4, 5.45, 5.5, 5.55, 5.6, 5.65, 5.7, 5.75, 5.8, 5.85, 5.9, 5.95, 6, or a range between two of these values, but is not limited thereto.

If the S/P value satisfies the above range, a balance between the chemical stability and high ionic conductivity of the compound can be secured.

In the argyrodite-type crystal structure, replacing sulfur with a halogen anion stabilizes the cubic phase, so that a cubic structure can be obtained even at room temperature.

The substituted halogen element forms a vacancy at a Li site inside the argyrodite unit cell, thereby reducing the activation energy to form a new lithium ion conduction path, and as a result, the lithium ion conductivity can be improved.

Meanwhile, the crystal phase of the argyrodite-type crystal structure may comprise two or more kinds of halogen elements. As halogen elements, F, Cl, Br, I, and the like exist, but Cl, Br, I, and the like can typically be used in a compound having an argyrodite-type crystal structure.

Here, in the crystal phase of the argyrodite-type crystal structure, the molar ratio X/P of the halogen (X) element to the phosphorus (P) element may be 1 to 2, for example, 1, 1.02, 1.04, 1.06, 1.08, 1.1, 1.12, 1.14, 1.16, 1.18, 1.2, 1.22, 1.24, 1.26, 1.28, 1.3, 1.32, 1.34, 1.36, 1.38, 1.4, 1.42, 1.44, 1.46, 1.48, 1.5, 1.52, 1.54, 1.56, 1.58, 1.6, 1.62, 1.64, 1.66, 1.68, 1.7, 1.72, 1.74, 1.76, 1.78, 1.8, 1.82, 1.84, 1.86, 1.88, 1.9, 1.92, 1.94, 1.96, 1.98, 2, or a range between two of these values, but is not limited thereto.

In this case, in the crystal phase of the argyrodite-type crystal structure, the molar ratio O/P of the oxygen (O) element to the phosphorus (P) element may be 0.5 or less, for example, 0.5, 0.48, 0.46, 0.44, 0.42, 0.4, 0.38, 0.36, 0.34, 0.32, 0.3, 0.28, 0.26, 0.24, 0.22, 0.2, 0.18, 0.16, 0.14, 0.12, 0.1, 0.08, 0.06, 0.04, 0.02, 0.01, or a range between two of these values.

The oxygen (O) element may be substituted at the S site of PS₄³⁻ in the argyrodite-type crystal structure. By substituting the P-S bond with a more stable P-O bond, the atmospheric stability can be improved.

When oxygen is doped into a sulfide-based solid electrolyte compound comprising a crystal phase of an argyrodite-type crystal structure, the crystal phase may have a different composition depending on the dopant used.

In an embodiment, the crystal phase of the argyrodite-type crystal structure may be represented by the following Chemical Formula 1:

[Chemical Formula 1] Li₇₋ₓPS_{6-(x+y)}XₓO_{y}

In Chemical Formula 1, 1≤x≤2 and 0<y≤0.5. For example, x may be 1, 1.02, 1.04, 1.06, 1.08, 1.1, 1.12, 1.14, 1.16, 1.18, 1.2, 1.22, 1.24, 1.26, 1.28, 1.3, 1.32, 1.34, 1.36, 1.38, 1.4, 1.42, 1.44, 1.46, 1.48, 1.5, 1.52, 1.54, 1.56, 1.58, 1.6, or a value between two of these values, and y may be 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5, or a value between two of these values, but is not limited thereto.

In the composition of Chemical Formula 1, the ratio of the sulfur element may be reduced by the addition of the oxygen dopant.

Meanwhile, in another embodiment, the crystal phase of the argyrodite-type crystal structure may be represented by the following Chemical Formula 1':

[Chemical Formula 1'] Li₇₋ₓPS₆₋ₓXₓO_{y}

In Chemical Formula 1', 1≤x≤2 and 0<y≤0.5. For example, x may be 1, 1.02, 1.04, 1.06, 1.08, 1.1, 1.12, 1.14, 1.16, 1.18, 1.2, 1.22, 1.24, 1.26, 1.28, 1.3, 1.32, 1.34, 1.36, 1.38, 1.4, 1.42, 1.44, 1.46, 1.48, 1.5, 1.52, 1.54, 1.56, 1.58, 1.6, or a value between two of these values, and y may be 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5, or a value between two of these values, but is not limited thereto.

In the composition of Chemical Formula 1', the ratio of the sulfur element can be maintained even when the oxygen dopant is added. When some sulfate-based oxygen dopants are used, the compound of Chemical Formula 1' can be formed.

Meanwhile, the sulfide-based solid electrolyte compound may have a critical current density of 0.86 mA/cm² or more, for example, 0.86 mA/cm², 0.87 mA/cm², 0.88 mA/cm², 0.89 mA/cm², 0.9 mA/cm², 0.91 mA/cm², 0.92 mA/cm², 0.93 mA/cm², 0.94 mA/cm², 0.95 mA/cm², 0.96 mA/cm², 0.97 mA/cm², 0.98 mA/cm², 0.99 mA/cm², 1 mA/cm², or a range between two of these values:

### [Critical current density]

Here, the critical current density is the current value at which a cell short occurs when charging and discharging are performed while increasing the current value per unit area at 25°C, using a symmetric cell in which Li metal is positioned at both ends of a solid electrolyte layer prepared by pressing 200 mg of the sulfide-based solid electrolyte compound at 4 ton for 2 minutes.

A sulfide-based solid electrolyte compound having a high critical current density means that the interfacial stability between lithium and the solid electrolyte is excellent, and such a sulfide-based solid electrolyte compound can have excellent cycle characteristics even when used for a long time.

In addition, a high critical current density of a sulfide-based solid electrolyte compound may also mean that its atmospheric stability is excellent, so that it is easy to use a Li metal negative electrode.

Therefore, the sulfide-based solid electrolyte compound can be advantageously applied to a lithium metal battery.

Meanwhile, when oxygen is doped into a sulfide-based solid electrolyte compound, characteristics such as ionic conductivity, atmospheric stability, and critical current density may vary depending on the type of oxygen dopant.

The sulfide-based solid electrolyte compound may be a compound derived from at least one selected from the group consisting of P₂O₅, Li₂SO₄, and Li₃PO₄.

In an example, the sulfide-based solid electrolyte compound may be obtained by mixing lithium sulfide (Li₂S) powder, phosphorus pentasulfide (P₂S₅) powder, lithium halide (LiX) powder, and an oxygen source powder, and sintering the mixture at 350 to 600°C, for example, at 350°C, 355°C, 360°C, 365°C, 370°C, 375°C, 380°C, 385°C, 390°C, 395°C, 400°C, 405°C, 410°C, 415°C, 420°C, 425°C, 430°C, 435°C, 440°C, 445°C, 450°C, 455°C, 460°C, 465°C, 470°C, 475°C, 480°C, 485°C, 490°C, 495°C, 500°C, 505°C, 510°C, 515°C, 520°C, 525°C, 530°C, 535°C, 540°C, 545°C, 550°C, 555°C, 560°C, 565°C, 570°C, 575°C, 580°C, 585°C, 590°C, 595°C, 600°C, or a range between two of these values, under an inert atmosphere.

Here, each component may be stoichiometrically calculated and mixed so as to have the composition of Chemical Formula 1 or Chemical Formula 1' described above.

Meanwhile, the sintering temperature and atmosphere may be applied differently depending on the target composition.

In addition, the lithium halide (LiX) may be at least one selected from the group consisting of lithium chloride (LiCl), lithium bromide (LiBr), and lithium iodide (LiI).

In this case, the oxygen source powder may be at least one selected from the group consisting of P₂O₅, Li₂SO₄, and Li₃PO₄. Among these, when Li₂SO₄ is used as the oxygen source powder, the compound of Chemical Formula 1' can be formed.

Meanwhile, the sulfide-based solid electrolyte compound may have an ionic conductivity at 25°C of more than 1.15 mS/cm, for example, 1.16 mS/cm, 1.18 mS/cm, 1.2 mS/cm, 1.25 mS/cm, 1.3 mS/cm, 1.35 mS/cm, 1.4 mS/cm, 1.45 mS/cm, 1.5 mS/cm, 1.55 mS/cm, 1.6 mS/cm, 1.65 mS/cm, 1.7 mS/cm, 1.75 mS/cm, 1.8 mS/cm, 1.85 mS/cm, 1.9 mS/cm, 1.95 mS/cm, 2 mS/cm, 2.05 mS/cm, 2.1 mS/cm, 2.15 mS/cm, 2.2 mS/cm, 2.25 mS/cm, 2.3 mS/cm, 2.35 mS/cm, 2.4 mS/cm, 2.45 mS/cm, 2.5 mS/cm, 2.55 mS/cm, 2.6 mS/cm, 2.65 mS/cm, 2.7 mS/cm, 2.75 mS/cm, 2.8 mS/cm, 2.85 mS/cm, 2.9 mS/cm, 2.95 mS/cm, 3 mS/cm, 3.05 mS/cm, 3.1 mS/cm, 3.15 mS/cm, 3.2 mS/cm, 3.25 mS/cm, 3.3 mS/cm, 3.35 mS/cm, 3.4 mS/cm, 3.45 mS/cm, 3.5 mS/cm, 3.55 mS/cm, 3.6 mS/cm, 3.65 mS/cm, 3.7 mS/cm, 3.75 mS/cm, 3.8 mS/cm, 3.85 mS/cm, 3.9 mS/cm, 3.95 mS/cm, 4 mS/cm, 4.05 mS/cm, 4.1 mS/cm, 4.15 mS/cm, 4.2 mS/cm, 4.25 mS/cm, 4.3 mS/cm, 4.35 mS/cm, 4.4 mS/cm, 4.45 mS/cm, 4.5 mS/cm, 4.55 mS/cm, 4.6 mS/cm, 4.65 mS/cm, 4.7 mS/cm, 4.75 mS/cm, 4.8 mS/cm, 4.85 mS/cm, 4.9 mS/cm, 4.95 mS/cm, 5 mS/cm, or a range between two of these values.

### Solid electrolyte membrane

According to another aspect, there is provided a solid electrolyte membrane comprising the above-described sulfide-based solid electrolyte compound.

Here, the solid electrolyte membrane may mean that a sulfide-based solid electrolyte compound, which is a kind of solid-phase material capable of ionic conduction, is formed in a membrane-type structure.

The solid electrolyte membrane may be manufactured according to a conventional method known in the art. For example, the solid electrolyte membrane may be manufactured by press-molding a powder of the sulfide-based solid electrolyte compound and then processing it into a required shape.

However, since it is difficult to maintain a membrane-type structure with only a sulfide-based solid electrolyte compound, the solid electrolyte membrane can be manufactured by mixing a binder.

Here, as the binder, one having excellent binding strength to the sulfide-based solid electrolyte compound, having no decrease in ionic conductivity, and having excellent flexibility is preferable. In addition, it should be easily peelable from a release film typically used in the manufacture of a solid electrolyte membrane.

For example, polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof may be mentioned, and one or a mixture of two or more thereof may be used.

Such a solid electrolyte membrane can be manufactured by applying a slurry comprising a sulfide-based solid electrolyte compound, a binder, and a solvent onto a release film, and then removing the solvent.

In addition, the solid electrolyte membrane may further comprise a conductive material, an auxiliary binder, and the like, as needed.

The conductive material is used to impart conductivity so as to enable electron transfer accompanying the movement of ions, and its kind is not limited as long as it has electron conductivity without an unnecessary chemical reaction. For example, there are graphite, carbon black, acetylene black, Ketjen black, furnace black, lamp black, thermal black, a carbon fiber, a carbon nanotube, graphene, copper, aluminum, nickel, gold, silver, a conductive polymer, and the like.

In the solid electrolyte membrane, the content of the sulfide-based solid electrolyte compound may be 80 to 99.9 wt%, for example, 80 wt%, 80.5 wt%, 81 wt%, 81.5 wt%, 82 wt%, 82.5 wt%, 83 wt%, 83.5 wt%, 84 wt%, 84.5 wt%, 85 wt%, 85.5 wt%, 86 wt%, 86.5 wt%, 87 wt%, 87.5 wt%, 88 wt%, 88.5 wt%, 89 wt%, 89.5 wt%, 90 wt%, 90.5 wt%, 91 wt%, 91.5 wt%, 92 wt%, 92.5 wt%, 93 wt%, 93.5 wt%, 94 wt%, 94.5 wt%, 95 wt%, 95.5 wt%, 96 wt%, 96.5 wt%, 97 wt%, 97.5 wt%, 98 wt%, 98.5 wt%, 99 wt%, 99.5 wt%, 99.9 wt%, or a range between two of these values, but is not limited thereto.

Here, the thickness of the solid electrolyte membrane is not limited, and may be 5 to 300 µm, for example, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, 150 µm, 155 µm, 160 µm, 165 µm, 170 µm, 175 µm, 180 µm, 185 µm, 190 µm, 195 µm, 200 µm, 205 µm, 210 µm, 215 µm, 220 µm, 225 µm, 230 µm, 235 µm, 240 µm, 245 µm, 250 µm, 255 µm, 260 µm, 265 µm, 270 µm, 275 µm, 280 µm, 285 µm, 290 µm, 295 µm, 300 µm, or a range between two of these values.

Meanwhile, the solid electrolyte membrane may have a free-standing characteristic that allows it to be used without a separate support, but is not limited thereto.

### Lithium secondary battery

According to still another aspect of the present disclosure, there may be provided a lithium secondary battery having the above-described solid electrolyte membrane.

The above-described solid electrolyte membrane may be disposed as a separate layer (solid electrolyte layer) between the positive electrode and the negative electrode. In addition, the solid electrolyte may be partially comprised within the positive electrode active material layer of the positive electrode independently of the solid electrolyte layer, or the solid electrolyte may be partially comprised within the negative electrode active material layer of the negative electrode independently of the solid electrolyte layer.

That is, the lithium secondary battery may specifically comprise a positive electrode, a negative electrode located opposite to the positive electrode, and a solid electrolyte membrane interposed between the positive electrode and the negative electrode. Here, since the solid electrolyte membrane is the same as described above, a detailed description thereof is omitted for convenience, and hereinafter, only the remaining components not described above will be described in detail.

The lithium secondary battery may further comprise a battery case accommodating an electrode assembly of the positive electrode, the negative electrode, and the solid electrolyte membrane, and optionally, a sealing member for sealing the battery case.

The positive electrode may comprise a positive electrode current collector and a positive electrode active material layer disposed on the positive electrode current collector.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

As the positive electrode active material, a compound capable of reversible intercalation/deintercalation of lithium can be used. For example, there are cobalt oxide-based (LCO), nickel oxide-based (LNO), manganese oxide-based (LMO), nickel-cobalt-manganese oxide-based (NCM), nickel-cobalt-aluminum oxide-based (NCA), iron phosphate-based (LFP), and those doped and/or coated thereon, and the like, but are not limited thereto.

The positive electrode active material layer can be manufactured by applying, to the positive electrode current collector, a positive electrode slurry composition comprising the positive electrode active material together with a conductive material and, optionally as needed, a binder.

Meanwhile, the positive electrode active material may be included at 80 wt% to 99 wt%, more specifically 85 wt% to 98.5 wt%, with respect to the total weight of a positive electrode slurry for forming the positive electrode active material layer. When the positive electrode active material is included in the above content range, excellent capacity characteristics may be exhibited, but the present disclosure is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode can be manufactured according to a conventional positive electrode manufacturing method. Specifically, it can be manufactured by applying a positive electrode slurry composition, which is prepared by dissolving or dispersing a positive electrode active material, a binder, and a conductive material in a solvent, onto a positive electrode current collector, followed by drying and rolling.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

As described above, since the lithium secondary battery comprising the solid electrolyte membrane according to the present disclosure exhibits stable cycle characteristics without an increase in overvoltage, it is useful in portable devices such as a mobile phone, a notebook computer and a digital camera, and an electric vehicle field such as a hybrid electric vehicle (HEV).

The outer shape of the lithium secondary battery according to the present disclosure is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present disclosure, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present disclosure will be described in further detail with reference to examples. However, these examples are merely provided to exemplify the present disclosure, and thus the scope of the present disclosure will not be construed to be limited by these examples.

### Preparation Example 1. Preparation of sulfide-based solid electrolyte compound

### Comparative Example 1

In a dry room (DP -60°C), the lithium precursor Li₂S, the phosphorus precursor P₂S₅, and the chlorine precursor LiCl were weighed in stoichiometric proportions so as to obtain the target composition Li_{5.5}PS_{4.5}Cl_{1.5}, and were mixed for 15 minutes using a Henschel mixer (FM mixer).

The mixture was placed in a crucible comprising Al₂O₃, and then sintering was carried out in a box furnace. In order to suppress the reaction with the gas present inside the box furnace, N₂ gas was flowed as an inert gas while the temperature was raised to a maximum temperature of 560°C at a rate of 6.0°C/min and then maintained for 6 hours for heat treatment to perform sintering, followed by natural cooling, to prepare the sulfide-based solid electrolyte compound of Comparative Example 1.

### Comparative Example 2

A sulfide-based solid electrolyte compound was prepared in the same manner as in Comparative Example 1, except that in a dry room (DP -60°C), the lithium precursor Li₂S, the phosphorus precursor P₂S₅, the chlorine precursor LiCl, and the oxygen precursor Li₂O were weighed in stoichiometric proportions so as to obtain the target composition Li_{5.5}PS_{4.4}Cl_{1.5}O_{0.1}.

### Comparative Example 3

A sulfide-based solid electrolyte compound was prepared in the same manner as in Comparative Example 1, except that in a dry room (DP -60°C), the lithium precursor Li₂S, the phosphorus precursor P₂S₅, the chlorine precursor LiCl, and the oxygen precursor Li₂O were weighed in stoichiometric proportions so as to obtain the target composition Li_{5.5}PS_{4.3}Cl_{1.5}O_{0.2}.

### Example 1

A sulfide-based solid electrolyte compound was prepared in the same manner as in Comparative Example 1, except that in a dry room (DP -60°C), the lithium precursor Li₂S, the phosphorus precursor P₂S₅, the chlorine precursor LiCl, and the oxygen precursor P₂O₅ were weighed in stoichiometric proportions so as to obtain the target composition Li_{5.5}PS_{4.4}Cl_{1.5}O_{0.1}.

### Example 2

A sulfide-based solid electrolyte compound was prepared in the same manner as in Comparative Example 1, except that in a dry room (DP -60°C), the lithium precursor Li₂S, the phosphorus precursor P₂S₅, the chlorine precursor LiCl, and the oxygen precursor P₂O₅ were weighed in stoichiometric proportions so as to obtain the target composition Li_{5.5}PS_{4.3}Cl_{1.5}O_{0.2}.

### Example 3

A sulfide-based solid electrolyte compound was prepared in the same manner as in Comparative Example 1, except that in a dry room (DP -60°C), the lithium precursor Li₂S, the phosphorus precursor P₂S₅, the chlorine precursor LiCl, and the oxygen precursor Li₂SO₄ were weighed in stoichiometric proportions so as to obtain the target composition Li_{5.5}PS_{4.5}Cl_{1.5}O_{0.1}.

### Example 4

A sulfide-based solid electrolyte compound was prepared in the same manner as in Comparative Example 1, except that in a dry room (DP -60°C), the lithium precursor Li₂S, the phosphorus precursor P₂S₅, the chlorine precursor LiCl, and the oxygen precursor Li₂SO₄ were weighed in stoichiometric proportions so as to obtain the target composition Li_{5.5}PS_{4.5}Cl_{1.5}O_{0.2}.

### Example 5

A sulfide-based solid electrolyte compound was prepared in the same manner as in Comparative Example 1, except that in a dry room (DP -60°C), the lithium precursor Li₂S, the phosphorus precursor P₂S₅, the chlorine precursor LiCl, and the oxygen precursor Li₃PO₄ were weighed in stoichiometric proportions so as to obtain the target composition Li_{5.5}PS_{4.4}Cl_{1.5}O_{0.1}.

### Example 6

A sulfide-based solid electrolyte compound was prepared in the same manner as in Comparative Example 1, except that in a dry room (DP -60°C), the lithium precursor Li₂S, the phosphorus precursor P₂S₅, the chlorine precursor LiCl, and the oxygen precursor Li₃PO₄ were weighed in stoichiometric proportions so as to obtain the target composition Li_{5.5}PS_{4.3}Cl_{1.5}O_{0.2}.

### Experimental Example 1. Characteristic analysis of sulfide-based solid electrolyte compound

The composition of the sulfide-based solid electrolyte compounds prepared according to Preparation Example 1, the ionic conductivity before and after exposure to the atmosphere through the atmospheric stability evaluation, the amount of hydrogen sulfide generated, and the critical current density were measured and shown in Tables 1 and 2 below.

For the atmospheric stability evaluation, the sulfide-based solid electrolyte compound was classified with an 80-mesh (180 µm) sieve. Air controlled so that the dew point became - 40°C ± 0.5°C at 25°C was flowed over the sulfide-based solid electrolyte compound for 24 hours, and the amount of hydrogen sulfide generated was measured with a hydrogen sulfide sensor, and the ionic conductivity before and after the evaluation was measured.

For the critical current density measurement, the sulfide-based solid electrolyte compound was classified with an 80-mesh (180 µm) sieve. 200 mg of the sulfide-based solid electrolyte compound powder was uniaxially pressed at a pressure of 4 ton for 2 minutes to prepare a pressure cell. At this time, Li metal was inserted at both ends of the sulfide-based solid electrolyte compound solid electrolyte layer to prepare a lithium secondary battery symmetric cell having a structure of Li/solid electrolyte layer/Li. The Li plating/stripping characteristics were evaluated at 25°C while gradually increasing the charge/discharge current value per unit area from 0.05 mA/cm² to 1.2 mA/cm², and the current value at which a cell short occurred was identified and taken as the critical current density.

**[Table 1]**

| Classification | | | Comp. Ex. 1 | Comp. Ex. 2 | Comp. Ex. 3 |
|---|---|---|---|---|---|
| Composition | Li | mol | 5.5 | 5.5 | 5.5 |
| | P | | 1 | 1 | 1 |
| | S | | 4.5 | 4.4 | 4.3 |
| | Cl | | 1.5 | 1.5 | 1.5 |
| | O | | - | 0.1 | 0.2 |
| Ionic conductivity (before) | | mS/cm | 4.30 | 4.10 | 4.04 |
| Ionic conductivity (after) | | mS/cm | 1.15 | 1.11 | 1.13 |
| Ionic conductivity retention rate | | % | 25 | 27 | 28 |
| Amount of hydrogen sulfide generated | | ppm | 1,000 | 980 | 960 |
| Critical current density | | mA/cm² | 0.86 | 0.80 | 0.78 |

**[Table 2]**

| Classification | | | Example 1 | Example 2 | Example 3 | Example 4 | Example 5 | Example 6 |
|---|---|---|---|---|---|---|---|---|
| Composition | Li | mol | 5.5 | 5.5 | 5.5 | 5.5 | 5.5 | 5.5 |
| | P | | 1 | 1 | 1 | 1 | 1 | 1 |
| | S | | 4.4 | 4.3 | 4.5 | 4.5 | 4.4 | 4.3 |
| | Cl | | 1.5 | 1.5 | 1.5 | 1.5 | 1.5 | 1.5 |
| | O | | 0.1 | 0.2 | 0.1 | 0.2 | 0.1 | 0.2 |
| Ionic conductivity (before) | | mS/cm | 4.45 | 4.38 | 4.70 | 4.63 | 4.28 | 4.25 |
| Ionic conductivity (after) | | mS/cm | 1.78 | 1.84 | 1.88 | 1.94 | 1.71 | 1.79 |
| Ionic conductivity retention rate | | % | 40 | 42 | 40 | 42 | 40 | 42 |
| Amount of hydrogen sulfide generated | | ppm | 650 | 620 | 650 | 620 | 650 | 620 |
| Critical current density | | mA/cm² | 0.88 | 0.86 | 0.95 | 0.97 | 0.86 | 0.88 |

Referring to Table 1, Comparative Example 1 without oxygen and Comparative Examples 2 and 3 using Li2O as a raw material exhibited a low ionic conductivity after exposure to the atmosphere. This characteristic can also be confirmed from the critical current density results.

On the other hand, referring to Table 2, the sulfide-based solid electrolyte compounds of the Examples using the oxygen raw materials P2O5, Li2SO4, and Li3PO4 exhibited an ionic conductivity at least equal to that of Comparative Example 1, and exhibited a significantly higher ionic conductivity after exposure to the atmosphere, showing an ionic conductivity retention rate of 40% or more.

According to the present disclosure, oxygen is doped into an argyrodite-type sulfide-based solid electrolyte compound to improve the atmospheric stability and electrochemical performance, and a lithium secondary battery comprising the same can exhibit stable cycle behavior even when lithium metal is used as the negative electrode.

In addition to the above-described effects, specific effects of the present disclosure are described while explaining specific details for the present disclosure.

Although embodiments of the present disclosure have been described above, those skilled in the art can make various modifications and changes to the present disclosure by adding, changing, or deleting components without departing from the spirit of the present disclosure as set forth in the claims, which will be included within the scope of rights of the present disclosure.

## Claims

1. A sulfide-based solid electrolyte compound, comprising a crystal phase of an argyrodite-type crystal structure,
wherein an ionic conductivity retention rate at 25°C before and after exposure to the atmosphere exceeds 28%:
[Ionic conductivity retention rate]
the ionic conductivity retention rate is obtained by dividing the ionic conductivity after exposure for 24 hours to air controlled so that the dew point becomes -40°C ± 0.5°C at 25°C by the ionic conductivity before the exposure, and multiplying the value by 100.

2. The sulfide-based solid electrolyte compound of claim 1, comprising a lithium (Li) element, a phosphorus (P) element, a sulfur (S) element, a halogen (X) element, and an oxygen (O) element.

3. The sulfide-based solid electrolyte compound of claim 2, wherein, in the crystal phase of the argyrodite-type crystal structure, the molar ratio O/P of the oxygen (O) element to the phosphorus (P) element is 0.5 or less.

4. The sulfide-based solid electrolyte compound of claim 1, wherein the crystal phase of the argyrodite-type crystal structure is represented by the following Chemical Formula 1:
[Chemical Formula 1] Li₇₋ₓPS_{6-(x+y)}XₓO_{y}
wherein, 1≤x≤2 and 0<y≤0.5.

5. The sulfide-based solid electrolyte compound of claim 1, wherein the crystal phase of the argyrodite-type crystal structure is represented by the following Chemical Formula 1':
[Chemical Formula 1'] Li₇₋ₓPS₆₋ₓXₓO_{y}
wherein, 1≤x≤2 and 0<y≤0.5.

6. The sulfide-based solid electrolyte compound of claim 1, having a critical current density of 0.86 mA/cm² or more:
[Critical current density]
the critical current density is the current value at which a cell short occurs when charging and discharging are performed while increasing the current value per unit area at 25°C, using a symmetric cell in which Li metal is positioned at both ends of a solid electrolyte layer prepared by pressing 200 mg of the sulfide-based solid electrolyte compound at 4 ton for 2 minutes.

7. The sulfide-based solid electrolyte compound of claim 1, which is a compound derived from at least one selected from the group consisting of P₂O₅, Li₂SO₄, and Li₃PO₄.

8. The sulfide-based solid electrolyte compound of claim 1, which is obtained by mixing lithium sulfide (Li₂S) powder, phosphorus pentasulfide (P₂S₅) powder, lithium halide (LiX) powder, and an oxygen source powder, and sintering the mixture at 350 to 600°C under an inert atmosphere.

9. The sulfide-based solid electrolyte compound of claim 8, wherein the oxygen source powder is at least one selected from the group consisting of P₂O₅, Li₂SO₄, and Li₃PO₄.

10. A solid electrolyte membrane comprising the sulfide-based solid electrolyte compound according to any one of claims 1 to 9.

11. A lithium secondary battery comprising the solid electrolyte membrane according to claim 10.
